# EUROPEAN PATENT SPECIFICATION

(11) **EP 4 554 773 B1**
(45) Date of publication and mention of the grant of the patent: **29.04.2026**
(21) Application number: 23776182.0
(22) Date of filing: 31.08.2023
(51) Int. Cl.: B29C 44/36, B29C 44/38

(54) **METHOD FOR MAKING MOLDED POLYMER FOAM**
VERFAHREN ZUR HERSTELLUNG VON GEFORMTEM POLYMERSCHAUM
PROCÉDÉ DE PRÉPARATION D'UNE MOUSSE POLYMÈRE MOULÉE

(30) Priority: 31.08.2022 IT 202200013834
(43) Date of publication of application: 21.05.2025
(73) Proprietor: Dow Global Technologies LLC, Midland, MI 48674 (US)
(72) Inventor: CORONEO, Mirella, 42015 Correggio (IT); GUJ, Luca, 8810 Horgen (CH)
(74) Representative: Beck Greener LLP
(86) International application number: PCT/US2023/031593
(87) International publication number: WO 2024/049936

(56) References cited:
- EP-A1- 0 014 518
- EP-A2- 0 949 051
- GB-A- 1 194 191
- US-A1- 2022 250 291

## Description

This invention relates to methods for producing molded polymer foam.

Many polymer foams are prepared by introducing a precursor fluid into a mold. The precursor fluid expands and cures in the mold to produce the polymer.

Product quality often depends on obtaining an even distribution of the precursor fluid in the mold before it hardens and can no longer flow. Uneven distribution can lead to defects, reduced performance and even rejected parts.

Distributing the precursor fluid is often a difficult problem. It becomes especially acute when producing large, thin parts such as laminated panels. Laminated panels, which can be single- or double faced, are materials that include a polymer foam layer and a facing layer bonded to one or both sides of the foam layer. These products are useful as thermal insulation panels due to the insulating properties of the foam layer.

Laminated panels often are made industrially in a continuous process. A typical continuous process is commonly known as double band lamination. In this process, the problem of obtaining even distribution of the precursor fluid is addressed, albeit often imperfectly, through the use of a distribution system that dispenses the precursor fluid through multiple outlets. The outlets are arranged across the width of a bottom facing layer, and are nowadays generally stationary. The bottom facing layer moves horizontally beneath the outlets. This motion produces from each outlet a strip of foam formulation on the bottom facing layer. The foam formulation then expands to produce a foam. Ideally, the individual strips meet and combine as they expand to form a continuous layer before they cure so much they can no longer flow. A top facing layer can be applied if desired after the precursor fluid has been dispensed but before it cures, to form a double-sided laminated panel.

Distribution systems useful in continuous lamination process are described, for example, in EP2125323A, EP2234732A, WO 2021/045888, WO 2021/046019, WO 2021/046020, WO 2021/046021 and WO 2012/046022. WO 2021/046019, WO 2021/046020, WO 2021/046021 and WO 2012/046022 all describe a flexible distributor made by bonding polymeric films together in such a way as to produce ducts and multiple outlets.

Some laminated panels are instead made in a discontinuous process. The discontinuous process is used frequently to produce products that have non-standard sizes or geometries and other specialty items that cannot be produced easily in a continuous process. In the discontinuous process, bottom and optionally top facing layers are oriented horizontally, defining opposing major sides of a mold. The facing layers are separated by frame members that define the sides of the mold. Together, the facing layers and frame members define an enclosed space to be filled with the precursor fluid. The precursor fluid is dispensed into that enclosed space and cured. The frame members are then separated from the resulting panel. The top and bottom facing layer remain adhered to the polymer foam layer.

Distribution systems such as are used in continuous laminated panel production have not been useful in discontinuous processes because of the difficulty in introducing a distributor into the mold and removing it after the precusor fluid has been dispensed into the mold cavity. Instead, the precursor fluid is generally introduced into the mold cavity through one or more openings in the frame members. This often leads to poor distribution of the precursor fluid because it has to flow significant distances across the mold, from the edge at which it is injected to the opposing edge, as well as laterally. The so-called "lance" and "withdrawal" methods attempt to alleviate this problem by inserting a hollow lance into the interior of the mold and introducing the precursor fluid through the lance. The lance can be gradually withdrawn as the mold cavity is filled. These methods reduce the distance the precursor has to flow in one dimension, but not laterally, and so are not entirely satisfactory.

This invention is in one aspect process for making a molded polymeric foam, comprising the steps of:
a) introducing a folded or rolled multilayer film fluid dispenser through a mold opening into a mold cavity, wherein the multilayer film fluid dispenser comprises
   (i) at least one first flexible film substrate layer and
   (ii) at least one second flexible film substrate layer,
      wherein the first flexible film substrate layer is bonded to the second flexible film substrate layer forming a multilayer film member; and
   (iii) at least one duct in fluid communication with at least one inlet and a plurality of outlets, the at least one duct being disposed between the first and second flexible film substrate layers and forming one or more paths for a fluid to pass through the multilayer film member from the at least one inlet of the duct to the plurality of outlets of the duct;
b) unfolding or unrolling the multilayer film fluid dispenser inside the mold; and
c) flowing a polymeric foam precursor fluid into the at least one inlet, through the at least one duct of the unfolded or unrolled multilayer film fluid dispenser and out of the plurality of outlets into the mold cavity;
   and then performing a curing step by curing the polymeric foam precursor fluid introduced into the mold cavity through the multilayer film fluid dispenser to produce the molded polymeric foam in the mold cavity.

Figures 1A-1F are top views, partially in section, collectively schematically illustrating an embodiment of the process of the invention.
Figure 2 is front sectional view of a first multilayer film fluid dispenser for use in the invention.
Figure 3 is a side section view taken along line 3-3 of Figure 2.
Figure 4 is a side section view taken along line 4-4 of Figure 2.
Figure 5A is a front sectional view illustrating the insertion of a second multilayer film fluid dispenser for use in the invention into a mold cavity.
Figure 5B is a front sectional view illustrating a fully inserted second multilayer film fluid dispenser into a mold cavity.
Figure 6A is a front sectional view of a third multilayer film fluid dispenser for use in the invention.
Figure 6B is a front sectional view of the third multilayer film fluid dispenser fully inserted into a mold cavity.
Figure 7A is a front sectional view illustrating the insertion of a fourth multilayer film fluid dispenser for use in the invention into a mold cavity.
Figure 7B is a front sectional view illustrating a fully inserted fourth multilayer film fluid dispenser into a mold cavity.

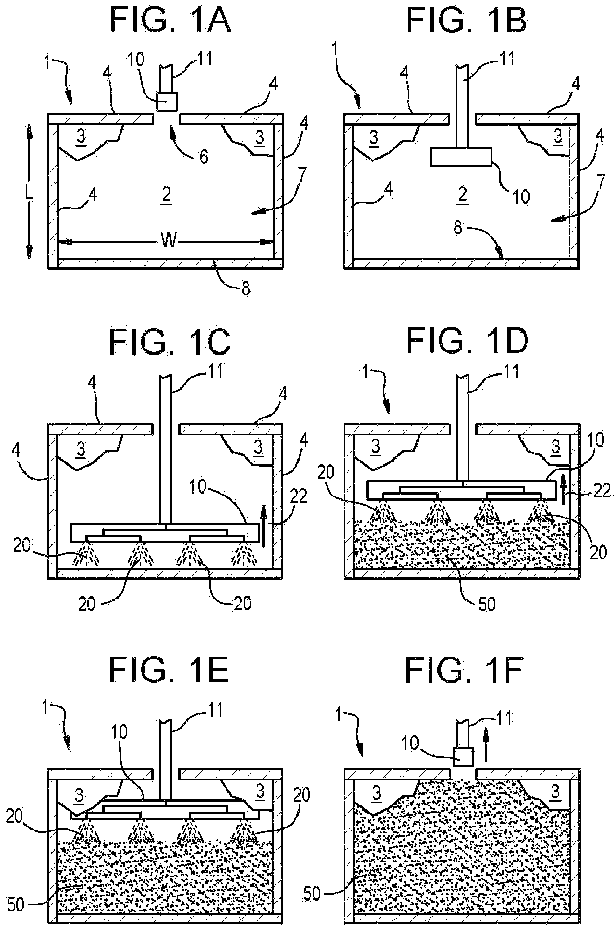

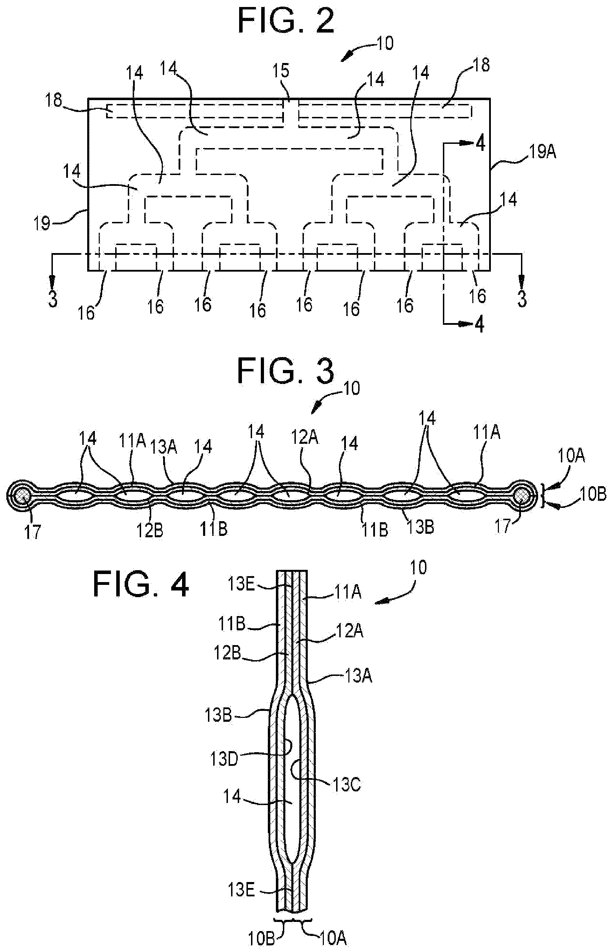

Turning to Figure 1, mold 1 includes bottom mold surface 2, top mold surface 3 and mold sides 4, which together define mold cavity 7. Mold opening 6 is provided in one of mold sides 4. As shown in Figures 1A and 1B, folded or rolled multilayer film fluid dispenser 10 is inserted through mold opening 6 and into mold cavity 7. Multilayer film fluid dispenser 10 is in fluid communication with an upstream distribution system (not shown) via conduit 11, through which polymeric foam precursor fluid is conducted into ducts 14 via inlet 15 (see Figure 2).

Referring again to Figure 1, as shown in Figures 1B and 1C, multilayer film fluid dispenser 10 is unfolded or unrolled after insertion into mold cavity 7. In its fully unfolded or unrolled condition, multilayer film fluid dispenser 10 preferably spans at least 50%, at least 75% or at least 90% of the width W of mold cavity 7. As described below, various methods are useful for unfolding or unrolling multilayer film fluid dispenser 10.

Referring to Figures 1 and 2, multilayer film fluid dispenser 10 includes ducts 14 that define multiple fluid paths through multilayer film fluid dispenser 10 from inlet 15 to outlets 16. After inserting multilayer film fluid dispenser 10 into mold cavity 7 and unfolding or unrolling it, polymeric foam precursor fluid is flowed via conduit 11 from an upstream distribution system (not shown) into multilayer film fluid dispenser 10 via inlet 15, and from there through ducts 14 and out of multiple outlets 16 of unfolded or unrolled multilayer film fluid dispenser 10 and into mold cavity 7. This produces jets 20 of polymeric foam precursor fluid.

Adjecent jets 20 of polymeric foam precursor fluid may be parallel to each other or at small (such as up to 20°) deviations from parallel. Individual jets 20 of polymeric foam precursor fluid expand and combine with adjacent jets 20 to form continuous mass 50 of polymeric foam precursor fluid within mold cavity 7.

In the particular embodment shown in Figure 2, ducts 14 are a branched system in which ducts 14 include branch points at which the ducts are divided to define the multiple flowpaths. Seven such branch points are arbitrarily illustrated in the embodiment shown in Figure 2, at each of which an incoming stream of polymeric foam precursor fluid is divided into two streams. The branched duct system may include as few as one such branch point and any arbitrarily larger number thereof, such as at least 2, at least 3, at least 4, at least 5, at least 7, at least 10, at least 15 or at least 31 and, for example, up to 100, up to 50 or up to 25 branch points. A "branch point" for purposes of this invention is simply a point within ducts 14 at which the polymeric foam precursor fluid or portion thereof is divided into two or more streams (preferably exactly two) as it passes through the duct system.

The embodiment shown in Figure 2 includes a preferred feature in that all the flow paths from inlet 15 to outlets 16 have the same length. Due to this feature, the residence time of the polymeric foam precursor fluid is the same or very nearly the same for each of the flow paths, and the polymeric foam precursor fluid reaches each of outlets 16 at the same or very nearly the same state of cure. Being at the same state of cure, the polymeric foam precursor fluid exiting each of outlets 16 at any point in time has the same or very nearly the same viscoelastic properties.

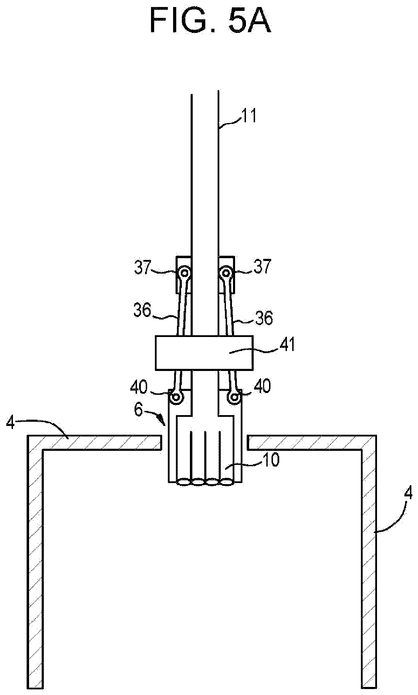

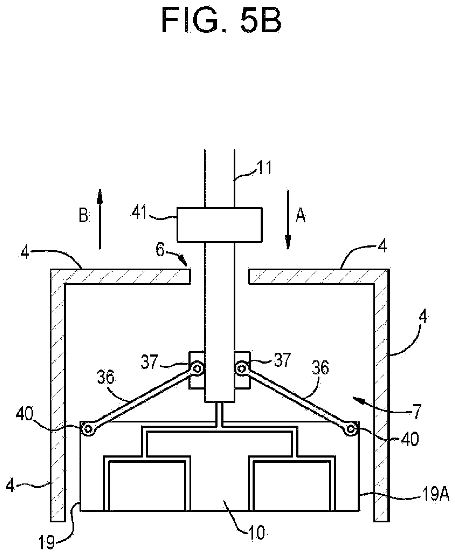

The number of flowpaths into which the polymer foam precursor fluid is divided within distribution system may be as few as 2 and can be any arbitrarily larger number, such as at least 2, at least 3, at least 4, at least 5, at least 7, at least 8, at least 10, at least 16 or at least 32, and, for example, up to 100, up to 50 or up to 25. Similarly, the number of outlets 16 may be as few as 2 and can be any arbitrarily larger number, such as at least 2, at least 3, at least 4, at least 5, at least 7, at least 8, at least 10, at least 16 or at least 32, and, for example, up to 100, up to 50 or up to 25. In Figure 5, the number of flowpaths and outlets 16 are arbitrarily shown as being 8 in number.

Outlets 16 may be arranged in a straight line, a staggered configuration, or other useful configuration.

Outlets 16 in some embodiments are uniformly spaced along the width of multilayer film fluid dispenser 10. The center-to-center distances between adjacent outlets 16 may be, for example is 10 to 300 mm, a preferred distance being 10 to 200 mm, 30 to 200 mm or 50 to 150 mm. The center-to-center distance between the two outermost outlets 16 may be, for example, 20 to 200 cm, 20 to 150 cm or 20 to 120 cm. The center-to-center distance between the two outermost outlets 16 may be, for example, 80 to 98% of the width W of mold cavity 7.

The embodiment illustrated in Figure 1 includes the optional features of (1) extending unfolded or unrolled multilayer film fluid dispenser 10 through mold cavity 7 at least partially to distal end 8 opposite mold opening 6 (as in Figure 1C), and (2) then withdrawing unfolded or unrolled multilayer film fluid dispenser 10 away from distal end 8 and toward mold opening 6 as polymeric foam precursor fluid is dispensed out of outlets 16 and into mold cavity 7. These preferred features help to distribute polymeric foam precursor fluid more evenly throughout the length L of mold cavity 7.

As shown in Figure 1C, in this embodiment, unfolded or unrolled multilayer film fluid dispenser 10 is moved toward distal end 8 of mold cavity 7 prior to starting the flow of polymeric foam precursor fluid. Unfolded or unrolled multilayer film fluid dispenser 10 may be inserted, for example, at least 50%, at least 75% or at least 90% into the length L of mold cavity 7 (i.e., at least 50%, at least 75% or at least 90% of the distance from mold opening 6 to distal end 8) prior to starting the flow of polymeric foam precursor fluid. The flow of polymer foam precursor fluid is then started, producing jets 20 of polymer foam precursor fluid, which expand and coalesce to form continuous mass 50. Unfolded or unrolled multilayer film fluid dispenser 10 is then gradually withdrawn in the direction indicated by arrow 22 toward mold opening 6 (as shown in Figures 1D and 1E), while continuously or intermittently dispensing polymeric foam precursor out of outlets 16 and into mold cavity 7. Unrolled or unfolded multilayer film fluid dispenser 10 may be withdrawn at the same rate at which mold cavity 7 becomes filled with polymeric foam precursor fluid.

The withdrawal method illustrated in Figure 1 is optional. In an alternative embodiment, multilayer film fluid dispenser 10 is maintained in a constant position within mold cavity 7 during the entire time the polymer foam precursor fluid is being dispensed. Thus for example, instead of positioning multilayer film fluid dispenser 10 near distal end 8 of mold cavity 7 and gradually withdrawing it (as shown in Figures 1C, 1D and 1E), multilayer film fluid dispenser may be held in a stationary position within mold cavity 7, such as adjacent to mold opening 6 as shown in Figure 1E, as polymer foam precursor fluid is dispensed into mold cavity 7 from multiple outlets 16.

Enough polymeric foam precursor fluid is introduced into mold cavity 7 through unfolded or unrolled multilayer film fluid dispenser 10 to completely fill mold cavity 7 after polymeric foam precursor fluid has expanded and cured to produce the molded polymeric foam.

As shown in Figure 1F, multilayer film fluid dispenser 10 is removed from mold cavity 7 via mold opening 6 after the necessary amount of polymeric foam precursor fluid has been introduced into mold cavity 7. It is generally necessary to refold or reroll multilayer film fluid dispenser 10 to remove it through mold opening 6.

The space within mold cavity 7 occupied by multilayer film fluid dispenser 10 prior to its removal is typically filled by polymeric foam precursor fluid due to its further expansion within mold cavity 7 after multilayer film fluid dispenser 10 is removed but before curing is complete. This further expansion reduces or eliminates defects in the molded polymer foam in the region occupied by multilayer film fluid dispenser 10 prior to its removal.

The polymeric foam precursor fluid is cured within the mold cavity to produce the product molded polymeric foam.

Turning now to Figures 2-4, multilayer film fluid dispenser 10 includes first flexible film substrate 10A and second flexible film substrate 10B. In the embodiment shown in Figures 2-4, each of flexible film substrates 10A and 10B is a multilayer structure, which is an optional but preferred embodiment. Film substrates 10A and 10B each may have more constituent layers or only one constituent layer. As shown, flexible film substrate 10A is made up of inside layer 12A and outside layer 11A, and flexible film substrate 10B is made up of inside layer 12B and outside layer 11B. Flexible film substrates 10A and 10B are bonded to each other via inside layers 12A and 12B, leaving surfaces 13A and 13B of outside layers 11A and 11B, respectively, facing externally.

Ducts 14 are created by bonding (e.g., by a heat sealing process) portions of flexible film substrate 10A to second film substate 10B via inside layers 12A and 12B at predetermined spaced-apart positions to form bond lines such as bond line 13E. As a result of the bonding process, ducts 14 are formed by unbonded surface portions 13C and 13D of inside layers 12A and 12B. Ducts 14 formed by the selective bonding process are embedded in between first and second flexible film substrates 10A and 10B.

Multilayer flexible fluid-dispensing liner members and methods for making them are further described in WO 2021/046019.

Ducts 14 are in fluid communication with at least one inlet 15 for receiving a polymeric foam precursor fluid from upstream apparatus (not shown) such as a mixhead. Ducts 14 further are in fluid communication with multiple outlets 16 for discharging the polymeric foam precursor fluid into mold cavity 7. Multiple outlets 16 and inlet(s) 15 are in fluid communication via ducts 14.

In the particular embodiment shown in Figure 2, blind ducts 18 are provided as a means for unfolding or unrolling multilayer film fluid dispenser 10. Blind ducts 18 are characterized in being in fluid communication with duct 14 (as shown) or an inlet 15 (which may be the same inlet as for ducts 14 or a separate inlet) and by having no associated outlet. Blind ducts 18 extend outwardly from a central section of multilayer film fluid dispenser 10 towards lateral edges 19 and 19A thereof. Polymeric foam precursor fluid entering blind ducts 18 from duct 14 and/or an inlet 15 is captured within blind ducts 18. Upon inserting folded or rolled multilayer film fluid dispenser 10 into mold cavity 7 and commencing a flow of polymer foam precursor fluid into multilayer film fluid dispenser 10, blind ducts 18 become filled with polymer film precursor fluid. The polymer foam precursor fluid captured in blind ducts 18 mechanically unfolds or unrolls multilayer film fluid dispenser 10 within mold cavity 7. In such an embodiment, multilayer film fluid dispenser preferably is removed from mold cavity 7 within a short time period after mold cavity 7 is filled with polymeric foam precursor fluid, before polymer foam precursor fluid cures within blind ducts 18, rending it difficult to refold or reroll multilayer film fluid dispenser 10.

In a modification of the embodiment shown in Figure 2, blind ducts 18, instead of being in fluid communication with ducts 14 and/or inlet 15, are in fluid communication with a separate inlet port through which a separate inflation fluid, such as air, another gas or a liquid, is pumped into blind ducts 18 to inflate them and unfold or unroll multilayer film fluid dispenser 10 in mold cavity 7.

Alternatively, blind ducts 18 and other separate apparatus for unfolding or unrolling multilayer film fluid dispenser 10 may be omitted, in which case polymeric foam precursor fluid flowing through ducts 14 provides sufficient stiffening to unfold or unroll multilayer film fluid dispenser 10.

Mechanical apparatus for unfolding or unrolling multilayer film fluid dispenser 10 may be provided instead of or in addition to blind ducts 18. Examples of such mechanical apparatus include spring systems of various types and other mechanical actuators. Figure 5 illustrates one such alternative embodiment. Arms 36 are pivotably affixed at or proximate to lateral sides 19 and 19A of multilayer film fluid dispenser 10 at pivot points 40 and pivotably mounted in a fixed position in an upstream direction from multilayer film fluid dispenser 10. In the particular embodiment shown in Figure 5, arms 36 are pivotably mounted onto conduit 11 at pivot points 37. Instead of being mounted directly onto conduit 11, pivot points 37 may be affixed onto other apparatus, such as an outer housing, collar, sheath or the like, which other apparatus is in a fixed position in an upstream direction from multilayer film fluid dispenser 10. Spring mechanisms may be provided at pivot points 40 and/or 37. As shown in Figure 5A, arms 36 are held within collar 41 to maintain multilayer film fluid dispenser 10 is in a folded or rolled position. Collar 41 is slidably mounted around conduit 11, arms 36 and multilayer film fluid dispenser 10. Multilayer film fluid dispenser 10 is passed through mold opening 6 and into mold cavity 7 in the direction indicated by arrow A (Fig 5B). Collar 41, being larger than than mold opening 6, engages and is retained by mold sides 4, remaining outside mold cavity 7, as shown in Figure 5B. Arms 36, no longer being constrained by collar 41, extend laterally due to the action of the spring mechanisms, unfolding or unrolling multilayer film fluid dispenser 10 within mold cavity 7. After the mold filling step is completed, conduit 11 and multilayer film fluid dispenser 10 are withdrawn from mold cavity 7 by moving them in the direction indicated by arrow B. Pivot points 37 and arms 36 are withdrawn past collar 41 and through mold opening 6, forcing pivot points 40 inward, refolding or rerolling multilayer film fluid dispenser 10 so it can be removed via mold opening 6.

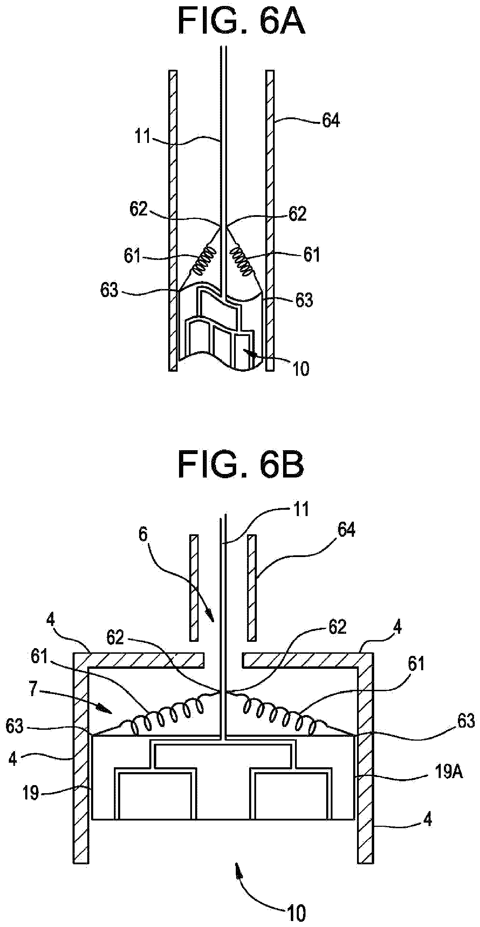

In the embodiment shown in Figure 6, springs 61 mechanically actuate the unfolding or unrolling of multilayer fluid dispenser 10. Springs 61 are affixed at or proximate to lateral sides 19 and 19A of multilayer film fluid dispenser 10 at attachment points 63 and mounted at a fixed position in an upstream direction from multilayer film fluid dispenser 10. In the particular embodiment shown in Figure 6, springs 61 are mounted onto conduit 11 at attachment points 62. Instead of being mounted directly onto conduit 11, springs 61 may be pivotably affixed onto other apparatus, such as an outer housing, collar, sheath or the like, which other apparatus is in a fixed position in an upstream direction from multilayer film fluid dispenser 10. Springs 61 and multilayer film fluid dispenser 10 are held within sheath 64 to maintain multilayer film fluid dispenser 10 in a folded or rolled position prior to insertion. Sheath 64 is slidably mounted around conduit 11, springs 61 and multilayer film fluid dispenser 10. Multilayer film fluid dispenser 10 is passed through mold opening 6 and into mold cavity 7. Sheath 64, being larger than mold opening 6, engages and is retained by mold sides 4, remaining outside mold cavity 7, as shown in Figure 6B. Springs 61, no longer being constrained by sheath 64, expand laterally, unfolding or unrolling multilayer film fluid dispenser 10 within mold cavity 7. After the mold filling step is completed, conduit 11 and multilayer film fluid dispenser 10 are withdrawn from mold cavity 7 by moving them in the direction indicated by arrow B. Springs 61 and multilayer film fluid dispenser 10 are withdrawn back into sheath 64, forcing attachment points 63 inward, refolding or rerolling multilayer film fluid dispenser 10 so it can be removed via mold opening 6.

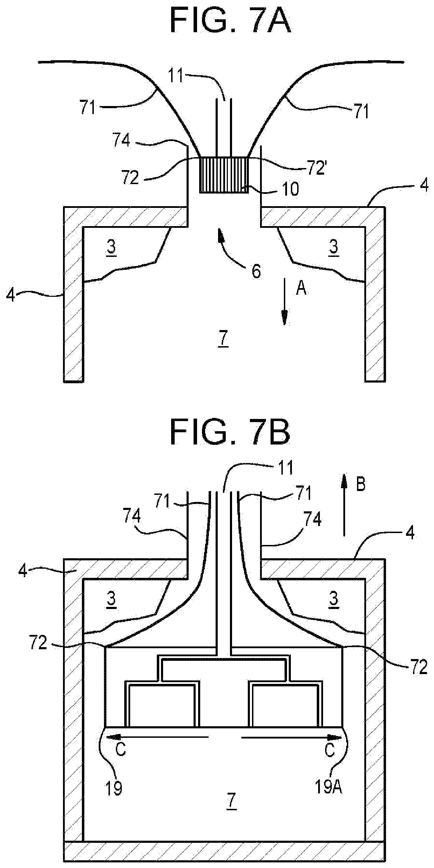

Yet another embodiment is shown in Figure 7. In this embodiment, curved actuator arms 71 operate to unfold or unroll multilayer fluid dispenser 10. Curved actuator arms 71 are affixed at or proximate to lateral sides 19 and 19A of multilayer film fluid dispenser 10 at attachment points 72. In this position, curved actuator arms 71 each curve outwardly from conduit 11. Prior to introduction into mold cavity 7, curved actuator arms 71 and multilayer film fluid dispenser 10 are held within sheath 74 to maintain multilayer film fluid dispenser 10 in a folded or rolled position. Multilayer film fluid dispenser 10 is passed through mold opening 6 and into mold cavity 7 in the direction indicated by arrow A. Sheath 74 is slidably mounted around conduit 11, curved actuator arms 71 and multilayer film fluid dispenser 10. Sheath 74, being larger than mold opening 6, engages and is retained by mold sides 4, remaining outside mold cavity 7, as shown in Figure 7B. As curved actuator arms 71 pass through sheath 74 and mold opening 6, their curvature forces attachment points 72 laterally outward in the direction indicated by arrows C, respectively, unfolding or unrolling multilayer film fluid dispenser 10 within mold cavity 7. After the mold filling step is completed, conduit 11 and multilayer film fluid dispenser 10 are withdrawn from mold cavity 7 by moving them in the direction indicated by arrow B. As curved actuator arms 71 are withdrawn through sheath 74, attachment points 72 are forced inwardly, refolding or rerolling multilayer film fluid dispenser 10 so it can be removed via mold opening 6.

The materials of construction of multilayer film fluid dispenser 10 preferably are organic polymers. Examples of such organic polymers include homopolymers and copolymers of polyethylene. These include, for example, low density polyethylene, linear low density polyethylene, high density polyethylene, ultrahigh molecular weight polyethylene, metallocene polyethylene and the like. Other useful organic polymers include polyesters, polypropylene, ethylene-propylene copolymers, oriented polyamides, polytetrafluoroethylene, various nylons and the like.

Flexible film substrates 10A and 10B may be, independently, monolayer or multilayer constructions. As illustrated in Figures 2-4, flexible film substrates 10A and 10B each are bilayer constructions. In such a bilayer construction, inside layers 12A and 12B may be, for example, a heat-sealable organic polymer such as a polyethylene; outside layers 11A and 11B in such embodiments may be, for example, another polyethylene or a polyester such as poly(ethylene terephthalate). Multilayer flexible film substrates 10A and 10B may be made, for example, in film coextrusion processes.

If desired, a separate layer of an adhesive may be disposed between flexible film substrates 10A and 10B to provide bonding between them, as further described in Figure 10 (and accompanying text) of WO 2021/046019. Similarly, a tie layer may be disposed between inside layer 12A and outside layer 11A, and/or between inside layer 12B and outside layer 11B.

The multilayer film fluid dispenser can be produced from the flexible film substrates using methods such as are described, for example, in any of WO 2021/046019, US Patent No. 7,147,597, US Patent No. 8,231,029, US Patent No. 8,348,509, US Published Patent Application Nos. 2017/0247156, 2015/0314928 and 2015/0314919. The flexible film substrates preferably are joined to produce the multilayer film fluid dispenser using heat sealing methods. Sealing conditions may include, for example, a sealing pressure of 0.1 to 10 bar gauge (0.01 to 1 MPa); a sealing temperature of 100 to 200°C, and a sealing time of 0.1 to 2 seconds. Sealing pressure is applied onto to those portions of the flexible film substrates that correspond to the spaces between the ducts. No sealing pressure is applied to the areas where ducts are to be produced.

The multilayer film fluid dispenser preferably exhibits a flexural modulus of 100 to 3000 MPa, as measured according to ASTM D790-17.

The multilayer film fluid dispenser preferably exhibits a tensile strength at maximum force (ASTM D1708-18) of 0.1 to 4 kPa, 0.1 to 10 kPa or 0.18 to 8 kPa, and an elongation at maximum force of no greater than 40%, preferably no greater than 30%.

The mold is any container into which the polymeric foam precursor fluid is introduced and cured. The mold includes a mold cavity, the surfaces of which define the geometry (size and shape) of the polymeric molded foam, and at least one mold opening. The mold may be held in a press which applies pressure to mold surfaces during at least the curing step, to keep the mold closed and/or control the amount of expansion achieved during the curing step.

In some embodiments, the mold forms all or part of the exposed surface of the finished article. Thus, the mold may be all or part of a shell of, for example, an insulated structure such as a refrigerator or freezer chest, door or panel or a cooler; a buoy, life preserver or other flotation device; an automotive part; or all or part of a shell of another hollow structure in which a polymer foam core is wanted.

In other embodiments, only a portion of the mold forms all or part of exposed surface of the finished article. An important example of such an embodiment is laminated panel manufacturing, in which the top and/or bottom surfaces of the mold form part of the finished article, being laminated to one or both sides of the molded polymeric foam. In such cases, the mold typically consists of top and bottom panels, and mold sides that are separate and/or detachable from at least one of the top and bottom panels so the mold sides can be removed from the finished article while leaving the top and/or bottom panel adhered to the polymeric molded foam. In such embodiments, the mold opening(s) preferably are located in one or more of the mold sides, and the top and bottom panels are held in a press as described before during at least the curing step.

The multilayer film fluid dispenser is introduced into a mold cavity through a mold opening. Because the mold opening is generally smaller in at least one dimension (typically width) than the multilayer film fluid dispenser, the multilayer film fluid dispenser is folded or rolled prior to insertion so it fits through the mold opening. The manner of folding or rolling is not critical. The multilayer film fluid dispenser may be folded in a regular pattern or in any random pattern (even simply being crumpled); it may or may not be creased as part of the folding process.

Once introduced into the mold, the multilayer film fluid dispenser is unfolded or unrolled as described before.

A polymeric foam precursor fluid is flowed into the duct inlet(s), then through the ducts of the unfolded or unrolled multilayer film fluid dispenser and out of the plurality of outlets into the mold cavity. During this step, the ducts become inflated with the polymeric foam precursor fluid and allow it to pass through the inflated ducts to the multiple outlets. The multilayer film fluid dispenser may be retracted through the mold cavity during this mold-filling step as described before with respect to Figure 1.

The polymer foam precursor fluid is typically produced by introducing its various constituent components into a mixhead via one or more supply systems. The supply systems may include various conduits, pumps, metering devices, storage devices, heating and/or cooling devices, operational systems (including computerized operational systems) as may be useful or desired to deliver the respective components to the mixhead in correct ratios and under suitable temperature and/or pressure conditions. The resulting polymer foam precursor fluid is then transferred to multilayer film fluid dispenser via a suitable fluid transport system such as conduit 11 in Figure 1.

Enough of the polymeric foam precursor fluid is introduced in this manner such that the mold cavity is filled after the polymeric foam precursor fluid expands during the curing step. If desired, an amount of polymer foam precursor fluid in excess of that needed to barely fill the mold cavity (after expansion) may be introduced during this step. If the mold cavity is overpacked in this manner, overpacking may be by 1 to 30%, *i.e.,* the amount of polymeric foam precursor fluid introduced is 1 to 30% greater than that needed to mimimally fill the mold after expansion.

After the mold cavity is filled, the multilayer film fluid dispenser preferably is removed from the mold cavity through the mold opening. This is performed by refolding and/or rerolling the multilayer film fluid dispenser and pulling it out of the mold opening. Refolding or rerolling can be done in various ways.

In embodiments in which the multilayer film fluid dispenser include blind ducts, the fluid within such blind ducts can be removed, producing a subatmospheric pressure which pulls the lateral edges of the multilayer film dispenser toward the center, causing it to refold or reroll.

In embodiments such as shown in Figure 5, arms 36 can be pulled outwardly through collar 41. As arms 36 pass outwardly through collar 41, pivot points 40 are pulled laterally inward toward mold opening 6, pulling lateral edges 19 and 19A of multilayer film fluid dispenser 10 inward and refolding or rerolling it. Similar refolding action is seen in the embodiments shown in Figures 6 and 7. In the Figure 6 embodiment, springs 61 are pulled outwardly through sheath 64, in turn pulling attachment points 62 and lateral edges 19 and 19A of multilayer film fluid dispenser 10 inward and refolding or rerolling it. In the Figure 7 embodiment, curved actuator arms are pulled outwardly through sheath 74, again pulling attachment points 72 and 72' and lateral sides 19 and 19A of multilayer film fluid dispenser 10 inward to refold or reroll it.

It still other embodiments, conduit 11 with attached multilayer film fluid dispenser 10 is simply pulled out through mold opening 6 with enough force to deform multilayer film fluid dispenser 10, folding or crumpling it sufficiently to remove it from the mold cavity. The multilayer film fluid dispenser does not need to be refolded or rerolled in the same manner as it was prior to insertion through the mold cavity.

In the curing step, the polymeric foam precursor fluid introduced into the mold cavity through the multilayer film fluid dispenser expands and forms molded polymeric foam that fills the mold cavity. The preferred isocyanate-based polymer foam precursor fluid described below typically begins to react, expand and cure spontaneously upon contacting the polyisocyanate component with other ingredients; accordingly, curing may commence during the mold filling step. For this reason, operating flow rates and other conditions generally are selected so the polymer foam precursor fluid remains in a flowable state until it has been discharged through the multiple outlets of the multilayer film fluid dispenser and into the mold cavity.

Curing is continued until a dimensionally stable molded polymeric foam is obtained. The foam is considered to be dimensionally stable if it does not collapse upon demolding and subsequently expands by no more than 10%, preferably no more than 5%.

Curing conditions are selected in conjunction with the particular polymeric foam precursor fluid. Depending on the particular case, the curing step can be performed at temperatures as low as 0°C or as low as 20°C and up to 100°C. The preferred isocyanate-based polymeric foam precursor fluid, for example, may be cured with or without applied heating, the fluid typically exhibiting an exothermic temperature rise as it reacts and cures. Even in this case, it may be desirable to speed the cure or drive it toward completion by applying heat to external surfaces of the mold. For example, mold surfaces may be heated to 50 to 150°C if desired for that purpose.

Internal mold pressures, prior to expansion of the polymeric foam precursor fluid, may be subatmospheric to slightly superatmospheric. A pressure rise may be experienced as the polymer foam precursor fluid expands. Mechanical pressure is typically applied to the major mold surfaces to control unwanted expansion and set product dimensions, notably thickness. The mold cavity may be vented.

Demold times may vary considerably, from 30 seconds to 10 minutes or more. The molded polymeric foam may be demolded once the polymeric foam precursor fluid has cured enough that the molded polymeric foam is dimensionally stable. Demolding is performed by removing the molded polymeric foam from some or all of the members that constitute the mold or, when some or all mold surfaces remain with the product, when mechanical pressure is released. When certain products such as laminated panels are produced, some of the mold surfaces may remain with the molded polymer foam. Thus, for example, mold sides 4 (see again Figure 1) may be separated from molded polymer foam while leaving top mold surface 3 and/or bottom mold surface 2 adhered to the molded polymer foam, thereby producing a laminate structure.

In producing such a laminate structure, the top and/or bottom mold surface is a facing material that remains with the molded polymeric foam. The top and/or bottom facing can be, for example, a metal (which may have an applied coating), kraft or other paper, a fiber-reinforced paper, a metal foil-paper composite layer, a plastic sheet or film, and the like. In cases in which the facings are flexible (as is the case with paper, plastic sheets and films and metal foils, for example) the laminated panel is sometimes referred to as "insulating board". The term "laminated panel" is used herein to encompass panels made with rigid facings (such as metal sheets) as well as "insulating board". Each facing layer preferably has a thickness of at most 5 mm, preferably up to 2.5 mm or up to 1 mm.

The process of the invention may and preferably does include various additional steps (and associated apparatus) as are needed to produce products for particular applications. When making laminated panels, the facing layers may be cut to a particular size and shape prior to the start of the process. Facing layers, particularly metal ones, may be pre-treated to promote good adhesion to the polymer foam or otherwise to facilitate panel manufacture. Examples of pre-treatment steps include decoiling, corona discharge treatment, profiling, heating to the process temperature, and application of a layer of an adhesion promoter.

Similarly, the process may and preferably does include one or more downstream steps, such as trimming the product, cooling the foam or laminated panel from the curing temperature, stacking the foam or laminated panels, and wrapping the foam or laminated panels or otherwise preparing them for shipment or storage.

A preferred polymeric foam precursor fluid is an isocyanate-based formulation that includes at least one polyisocyanate, at least one blowing agent, at least one catalyst for the reaction of the polyisocyanate with itself, with a chemical blowing and/or a alcohol group, and optionally but preferably at least one polyol. The polymeric foam precursor fluid is a liquid or a liquid/gas mixture (sometimes referred to as an "emulsion"); therefore, at least one of the components thereof is a liquid under the operating conditions. A nucleating gas such as air, nitrogen, hydrogen or argon may be mixed into the polymeric foam precursor fluid.

Suitable organic polyisocyanates for use in the invention include aliphatic, cycloaliphatic, araliphatic or aromatic polyisocyanates, or combinations of any two or more thereof. Such may include, for example, alkylene diisocyanates, particularly those having from 4 to 12 carbon atoms in the alkylene moiety, such as 1,12-dodecane diisocyanate, 2-ethyltetramethylene 1,4-diisocyanate, 2-methyl-pentamethylene 1,5-diisocyanate, 2-ethyl-2-butylpentamethylene 1,5-diisocyanate, tetramethylene 1,4-diisocyanate and preferably hexamethylene 1,6-diisocyanate; cycloaliphatic diisocyanates such as cyclohexane 1,3- and 1,4-diisocyanate and any mixture of these isomers, 1-isocyanato-3,3,5-trimethyl-5-isocyanato-methylcyclohexane (isophorone diisocyanate), 2,4- and 2,6-hexahydrotoluene diisocyanate and the corresponding isomer mixtures, 4,4'-, 2,2'- and 2,4'-dicyclohexylmethane diisocyanate and the corresponding isomer mixtures, araliphatic diisocyanates such as 1,4-xylylene diisocyanate and xylylene diisocyanate isomer mixtures, and preferably aromatic diisocyanates and polyisocyanates, such as 2,4- and 2,6-toluene diisocyanate and the corresponding isomer mixtures, 4,4'-, 2,4'- and 2,2'-diphenylmethane diisocyanate and the corresponding isomer mixtures, mixtures of 4,4'- and 2,4'-diphenylmethane diisocyanates, polyphenyl-polymethylene polyisocyanates, mixtures of 4,4'-, 2,4'- and 2,2'-diphenylmethane diisocyanates and polyphenylpolymethylene polyisocyanates (crude MDI), and mixtures of crude MDI and toluene diisocyanates. Modified polyisocyanates, *i.e*., products which are obtained by chemical reaction of organic diisocyanates and/or polyisocyanates, may also be used. Specific examples are ester-, urea-, biuret-, allophanate-, uretoneimine-, carbodiimide-, isocyanurate-, uretdione- and/or urethane-containing diisocyanates and/or polyisocyanates, that contain from 33.6 to 15 percent by weight, preferably from 31 to 21 percent by weight, of isocyanate groups, based on the total weight of the modified polyisocyanate. The organic polyisocyanates may be employed individually or in the form of combinations thereof.

The preferred polymeric foam precursor fluid typically includes at least one polyol, *i.e.,* a compound having two or more hydroxyl groups. A wide range of polyols can be used, depending in part on the desired properties of the polymer foam. Useful polyols therefore include polyether polyols, polyester polyols, hydroxyl-terminated polybutadiene rubbers, polyacrylate polyols and polycarbonate polyols, as well as other types. Useful polyols have hydroxyl equivalent weights of about 30 to 3000; however for laminate panel production it is preferred to use at least one polyol having a hydroxyl equivalent weight of 30 to 1000, especially 125 to 560. The polyols may have hydroxyl functionalities of 2 to 8 or more hydroxyl groups per molecule.

Useful polyether polyols include ethoxylates and/or propoxylates of one or more hydroxyl- and/or amine group containing starters that have an equivalent weight of 30 to 59, including, for example, one or more of ethylene glycol, diethylene glycol, triethylene glycol, 1,2-propane diol, 1,3-propanediol, dipropylene glycol, tripropylene glycol, glycerin, trimethylolpropane, trimethylolethane, neopentyl glycol, 1,6-hexanediol, 1,4-cyclohexanedimethanol, 1,2,6-hexanetriol, monoethanolamine, diethanolamine, triethanolamine, pentaerythritol, erythritol, sorbitol, sucrose, mannitol, N,N,N',N'-tetrakis(2-hydroxypropyl)-ethylenediamine, diethyl toluenediamine, dimethylthiotoluenediamine and combinations thereof.

Useful polyester polyols may be reaction products of, for example, an organic dicarboxylic acid (or corresponding acid anhydridesor ester) having about 2 to about 12 carbon atoms with a polyhydric alcohol, preferably a diol and/or triol having 2 to 12 carbon atoms, preferably from 2 to 6 carbon atoms. Examples of suitable dicarboxylic acids are succinic acid, glutaric acid, adipic acid, suberic acid, azelaic acid, sebacic acid, decanedicarboxylic acid, maleic acid, fumaric acid, and preferably orthophthalic acid, isophthalic acid, terephthalic acid and the isomeric naphthalene-dicarboxylic acids. The dicarboxylic acids may be used either individually or mixed with one another. Examples of dihydric and polyhydric alcohols used to make the polyester polyol are ethanediol, diethylene glycol, 1,2- and 1,3-propanediol, dipropylene glycol, 1,4-butanediol, 1,5-pentanediol, 1,6-hexanediol, 1,10-decanediol, glycerol, trimethylolpropane. Also useful are modified aromatic polyester polyols such as described in U. S. Patent No. 6,359,022, which contain one or more pendant aliphatic hydrocarbyl groups that have 6 or more carbon atoms in a straight or branched chain.

Furthermore, polyester-polyols made from lactones such as ε-caprolactone or hydroxycarboxylic acids such ω-hydroxycaproic acid and hydrobenzoic acid may also be employed. Hybrid polyether-polyester polyols such as are described, for example, in WO 2011/137011 are also useful.

Other useful polyols include compounds having 2 to 8 hydroxyl groups, equivalent weights of up to 125 and molecular weights up to 200, such as ethylene glycol, diethylene glycol, triethylene glycol, 1,2-propane diol, 1,3-propanediol, dipropylene glycol, tripropylene glycol, glycerin, trimethylolpropane, trimethylolethane, neopentyl glycol, 1,6-hexanediol, 1,4-cyclohexanedimethanol, 1,2,6-hexanetriol, mannitol, sucrose and sorbitol.

The polymeric foam precursor fluid contains at least one blowing agent, which may be a physical (endothermic) or chemical (exothermic) type, or both. A physical blowing agent is a one or more compounds that have boiling temperatures (at 1 atmosphere pressure) of 10°C to 80°C, preferably 10°C to 50°C, and which lack hydroxyl, primary and/or secondary amine, thiol, carboxyl or other groups other than halogen groups that are reactive toward isocyanate groups under the conditions of the curing reaction. Useful physical blowing agents include hydrocarbons, hydrofluorocarbons, hydrochlorocarbons, hydrofluorochlorocarbons, ethers and the like that have the aforementioned boiling temperatures. C4-C6 hydrocarbons such as any isomer (or mixture of isomers) of butane, pentane and hexane are particularly useful. Also useful are hydrofluoroolefins and hydrofluorochloro olefins such as described, for example, in US 2007/0100010. Specific examples thereof are trifluoropropene, 1,3,3,3-tetrafluoropropene (1234ze), 1,1,3,3-tetrafluoropropene, 2,2,3,3-tetrafluoropropene (1234yf), 1,2,3,3,3-pentafluoropropene (1225ye), 1,1,1-trifluoropropene, 1,1,1,3,3-pentafluoropropene (1225zc), 1,1,2,3,3-pentafluoropropene (1225yc), (Z)-1,1,1,2,3-pentafluoropropene (1225yez), 1-chloro-3,3,3-trifluoropropene (1233zd) and 1,1,1,4,4,4-hexafluorobut-2-ene (1336mzzm). Mixture of any two or more physical blowing agents can be used.

A physical blowing agent may, for example, be present in an amount of at least 12 parts by weight per 100 parts by weight of the polyol(s). The amount of physical blowing agent may be, for example, at least 12, at least 14 or at least 15 parts by weight on that basis and may be, for example, up to 25 parts, up to 22 parts, up to 20 parts or up to 18 parts, again on the same basis.

A particularly suitable chemical blowing agent is water which, when present, reacts to produce carbon dioxide.

Suitable catalysts include urethane catalysts, *i.e.,* a catalyst for the reaction of an alcohol group and/or water with an isocyanate group, isocyanate trimerization catalysts, and carbodiimide catalysts. Among suitable urethane catalysts are tin (II) and tin (IV) catalysts, catalysts that contain other Group III to Group XV metals; tertiary amine compounds, amidines, tertiary phosphines, and the like. Useful isocyanate trimerization catalysts include strong bases such as alkali metal phenolates, alkali metal alkoxides, alkali metal carboxylates, quaternary ammonium salts, and the like. Useful carbodiimide catalysts include phospholene oxides such as 3-methyl-1-phenyl-2-phospholene oxide (MPPO), 3-methyl-1-ethyl-2-phospholene oxide (MEPO), 3,4-dimethyl-1-phenyl-3-phospholene oxide, 3,4-dimethyl-1-ethyl 3-phospholene oxide, 1-phenyl-2-phospholen-1-oxide, 3-methyl-1-2-phospholen-1-oxide, 1-ethyl-2-phospholen-1-oxide, 3-methyl-1-phenyl-2-phospholen-1-oxide, and 3-phospholene isomers thereof.

The polymeric foam precursor fluid may further contain various optional ingredients. A foam-stabilizing surfactant is a useful optional ingredient. Suitable such surfactants include, but are not limited to, silicones such as silicone oils and organosilicone-polyether copolymers, including polydimethyl siloxane and polydimethylsiloxane-polyoxyalkylene block copolymers. Other suitable surfactants include organic surfactants such as nonylphenol ethoxylates and ethylene oxide/butylene oxide block co-polymers.

Another optional ingredient is a flame retardant, such as a phosphorus-containing flame retardant, a halogenated flame retardant and melamine.

In addition to the foregoing components, the polymeric foam precursor fluid may contain one or more fillers and/or reinforcing agents such as fiber glass, carbon fibers, flaked glass, mica, talc, melamine and calcium carbonate; one or more pigments and/or colorants such as titanium dioxide, iron oxide, chromium oxide, azo/diazo dyes, phthalocyanines, dioxazines and carbon black; one or more biocides; one or more preservatives; one or more antioxidants; one or more flame retardants; and the like.

Foam layer of a laminated panel made in accordance with the invention may have a foam density of, for example, 20 to 120 kg/m³ or 30 to 80 kg/m³ as measured according to ASTM 1622-88. The cells may be at least about 70 percent closed, at least about 80 percent closed or at least about 85 percent closed.

Laminated panels made in accordance with the invention can be used in the same manner and for the same purposes as laminated panels made using conventional processes. The panels can be used as thermal insulation for buildings, vehicles, pavement and other constructions. The panels are useful as lightweight decorative panels for building facades, interior wall partitions, and other uses.

Laminated panels made in accordance with the present invention are useful in both industrial and residential applications. Uses include, for example, cold stores insulation, doors, windows and sliding shutters. The laminated panels are also useful as construction or decorative panels even when thermal insulation properties are not needed. The laminated panels are useful, for example, in constructing building facades.

## Claims

1. A process for making a molded polymeric foam, comprising
a) introducing a folded or rolled multilayer film fluid dispenser through a mold opening into a mold cavity, wherein the multilayer film fluid dispenser comprises
(i) at least one first flexible film substrate layer and
(ii) at least one second flexible film substrate layer,
wherein the first flexible film substrate layer is bonded to the second flexible film substrate layer forming a multilayer film member; and
(iii) at least one duct in fluid communication with at least one inlet and a plurality of outlets, the at least one duct being disposed between the first and second flexible film substrate layers and forming one or more paths for a fluid to pass through the multilayer film member from the at least one inlet of the duct to the plurality of outlets of the duct;
b) unfolding or unrolling the multilayer film fluid dispenser inside the mold; and
c) flowing a polymeric foam precursor fluid into the at least one inlet, through the at least one duct of the unfolded or unrolled multilayer film fluid dispenser and out of the plurality of outlets into the mold cavity;
and then performing a curing step by curing the polymeric foam precursor fluid introduced into the mold cavity through the multilayer film fluid dispenser to produce the molded polymeric foam in the mold cavity.

2. The process of claim 1, further comprising, after step c) and before the curing step, a step d) refolding or rerolling the multilayer flexible film substrate layer and a step e) of removing the refolded or rerolled multilayer flexible film substrate layer through the mold opening.

3. The process of claim 1 or 2, further comprising, after the curing step, a demolding step.

4. The process of any preceding claim, wherein the mold comprises a bottom surface member, an opposing top surface member and one or more mold frame members that define sides of the mold, the bottom surface member, top surface member and one or more mold frame members defining the cavity of the mold.

5. The process of claim 4 wherein in the demolding step the one or more frame members are separated from the molded polyurethane foam, and the bottom and top surface members remain adhered to opposing sides of the molded polyurethane foam to form a laminate.

6. The process of any preceding claim wherein the multilayer film fluid dispenser comprises one or more blind ducts in fluid communication with an inlet and having no associated outlet, and wherein in step b) the multilayer film fluid dispenser is unfolded or unrolled by pumping polymeric foam precursor fluid and/or a separate inflation fluid into the blind ducts to inflate the blind ducts.

7. The process of any of claims 1-5 wherein arms are pivotably affixed to opposing lateral sides of the multilayer film fluid dispenser and are further pivotably mounted at attachment points in a fixed position in an upstream direction from the multilayer film fluid dispenser 10, and wherein in step b) the arms extend outwardly in a lateral direction to unfold or unroll the multilayer film fluid dispenser.

8. The process of any of claims 1-5 wherein springs are affixed to opposing lateral sides of the multilayer film fluid dispenser and affixed at attachment points 62 at a fixed position in an upstream direction from multilayer film fluid dispenser, and wherein in step b) the springs exend outwardly in a lateral direction to unfold or unroll the multilayer film fluid dispenser.

9. The process of any preceding claim wherein the unfolded or unrolled multilayer film fluid dispenser 10 is inserted at least 50% into a length L of the mold cavity prior to starting the flow of polymeric foam precursor fluid in step c), and during step c) the unfolded or unrolled multilayer film fluid dispenser is gradually withdrawn toward the mold opening while continuously or intermittently dispensing polymeric foam precursor out of the plurality of outlets and into the mold cavity.

10. The process of any preceding claim which is a discontinuous laminated panel process.

## Patentansprüche

1. Verfahren zur Herstellung eines geformten Polymerschaums, umfassend
a) Einführen eines gefalteten oder gerollten Mehrschichtfolienfluidspenders durch eine Formöffnung in einen Formhohlraum, wobei der Mehrschichtfolienfluidspender umfasst
(i) mindestens eine erste flexible Foliensubstratschicht und
(ii) mindestens eine zweite flexible Foliensubstratschicht,
wobei die erste flexible Foliensubstratschicht an die zweite flexible Foliensubstratschicht gebunden ist, wodurch ein Mehrschichtfolienelement gebildet wird; und
(iii) mindestens einen Kanal in Fluidverbindung mit mindestens einem Einlass und einer Vielzahl von Auslässen, wobei der mindestens eine Kanal zwischen der ersten und der zweiten flexiblen Foliensubstratschicht angeordnet ist und einen oder mehrere Pfade für ein Fluid bildet, um durch das Mehrschichtfolienelement von dem mindestens einen Einlass des Kanals zu der Vielzahl von Auslässen des Kanals zu gelangen;
b) Entfalten oder Abrollen des Mehrschichtfolienfluidspenders innerhalb der Form; und
c) Strömen eines Polymerschaumvorläuferfluids in den mindestens einen Einlass, durch den mindestens einen Kanal des entfalteten oder abgerollten Mehrschichtfolienfluidspenders und aus der Vielzahl von Auslässen in den Formhohlraum;
und anschließend Durchführen eines Aushärtungsschritts durch Aushärten des durch den Mehrschichtfolienfluidspender in den Formhohlraum eingebrachten Polymerschaumvorläuferfluids, um den geformten Polymerschaum in dem Formhohlraum herzustellen.

2. Verfahren nach Anspruch 1, ferner umfassend, nach Schritt c) und vor dem Aushärtungsschritt, einen Schritt d) des erneuten Faltens oder erneuten Aufrollens der flexiblen Mehrschichtfoliensubstratschicht und einen Schritt e) des Entfernens der erneut gefalteten oder erneut aufgerollten flexiblen Mehrschichtfoliensubstratschicht durch die Formöffnung.

3. Verfahren nach Anspruch 1 oder 2, ferner umfassend, nach dem Aushärtungsschritt, einen Entformungsschritt.

4. Verfahren nach einem der vorstehenden Ansprüche, wobei die Form ein unteres Oberflächenelement, ein gegenüberliegendes oberes Oberflächenelement und ein oder mehrere Formrahmenelemente umfasst, die Seiten der Form definieren, wobei das untere Oberflächenelement, das obere Oberflächenelement und ein oder mehrere Formrahmenelemente den Hohlraum der Form definieren.

5. Verfahren nach Anspruch 4, wobei in dem Entformungsschritt das eine oder die mehreren Rahmenelemente von dem geformten Polyurethanschaum getrennt werden und die unteren und oberen Oberflächenelemente an gegenüberliegenden Seiten des geformten Polyurethanschaums haften bleiben, um ein Laminat zu bilden.

6. Verfahren nach einem der vorstehenden Ansprüche, wobei der Mehrschichtfolienfluidspender einen oder mehrere Blindkanäle umfasst, die in Fluidverbindung mit einem Einlass stehen und keinen zugehörigen Auslass aufweisen, und wobei in Schritt b) der Mehrschichtfolienfluidspender durch Pumpen von Polymerschaumvorläuferfluid und/oder einem separaten Aufblasfluid in die Blindkanäle entfaltet oder abgerollt wird, um die Blindkanäle aufzublasen.

7. Verfahren nach einem der Ansprüche 1 bis 5, wobei Arme schwenkbar an gegenüberliegenden seitlichen Seiten des Mehrschichtfolienfluidspenders befestigt sind und ferner schwenkbar an Befestigungspunkten in einer festen Position in einer stromaufwärts gerichteten Richtung von dem Mehrschichtfolienfluidspender 10 montiert sind und wobei in Schritt b) sich die Arme nach außen in einer seitlichen Richtung erstrecken, um den Mehrschichtfolienfluidspender zu entfalten oder abzurollen.

8. Verfahren nach einem der Ansprüche 1 bis 5, wobei Federn schwenkbar an gegenüberliegenden seitlichen Seiten des Mehrschichtfolienfluidspenders befestigt sind und an Befestigungspunkten 62 in einer festen Position in einer stromaufwärts gerichteten Richtung von dem Mehrschichtfolienfluidspender befestigt sind und wobei in Schritt b) sich die Federn nach außen in einer seitlichen Richtung erstrecken, um den Mehrschichtfolienfluidspender zu entfalten oder abzurollen.

9. Verfahren nach einem der vorstehenden Ansprüche, wobei der entfaltete oder abgerollte Mehrschichtfolienfluidspender 10 vor dem Starten der Strömung des Polymerschaumvorläuferfluids in Schritt c) mindestens 50 % in eine Länge L des Formholraums eingeführt wird, und während Schritt c) der entfaltete oder abgerollte Mehrschichtfolienfluidspender allmählich zur Formöffnung hin zurückgezogen wird, während kontinuierlich oder intermittierend Polymerschaumvorläufer aus der Vielzahl von Auslässen und in den Formholraum abgegeben wird.

10. Verfahren nach einem der vorstehenden Ansprüche, welches ein diskontinuierliches Laminatplattenverfahren ist.

## Revendications

1. Procédé permettant de fabriquer une mousse polymère moulée, comprenant
a) l'introduction d'un distributeur de fluide à film multicouche plié ou enroulé à travers une ouverture de moule dans une cavité de moule, dans lequel le distributeur de fluide à film multicouche comprend
(i) au moins une première couche de substrat de film souple et
(ii) au moins une seconde couche de substrat de film souple,
dans lequel la première couche de substrat de film souple est liée à la seconde couche de substrat de film souple en formant un élément à film multicouche ; et
(iii) au moins un conduit en communication fluidique avec au moins une entrée et une pluralité de sorties, l'au moins un conduit étant disposé entre les première et seconde couches de substrat de film souple et formant un ou plusieurs trajets permettant à un fluide de traverser l'élément à film multicouche à partir de l'au moins une entrée du conduit vers la pluralité de sorties du conduit ;
b) le dépliage ou le déroulement du distributeur de fluide à film multicouche à l'intérieur du moule ; et
c) l'écoulement d'un fluide précurseur de mousse polymère dans l'au moins une entrée, à travers l'au moins un conduit du distributeur de fluide à film multicouche déplié ou déroulé et hors de la pluralité de sorties vers la cavité de moule ;
puis la mise en œuvre d'une étape de durcissement en durcissant le fluide précurseur de mousse polymère introduit dans la cavité de moule à travers le distributeur de fluide à film multicouche pour produire la mousse polymère moulée dans la cavité de moule.

2. Procédé selon la revendication 1, comprenant en outre, après l'étape c) et avant l'étape de durcissement, une étape d) consistant à replier ou à réenrouler la couche de substrat de film souple multicouche et une étape e) consistant à retirer la couche de substrat de film souple multicouche repliée ou réenroulée à travers l'ouverture de moule.

3. Procédé selon la revendication 1 ou 2, comprenant en outre, après l'étape de durcissement, une étape de démoulage.

4. Procédé selon l'une quelconque revendication précédente, dans lequel le moule comprend un élément de surface inférieur, un élément de surface supérieur opposé et un ou plusieurs éléments de cadre de moule qui définissent des côtés du moule, l'élément de surface inférieur, l'élément de surface supérieur et un ou plusieurs éléments de cadre de moule définissant la cavité du moule.

5. Procédé selon la revendication 4 dans lequel dans l'étape de démoulage le ou les éléments de cadre sont séparés de la mousse de polyuréthane moulée, et les éléments de surface inférieur et supérieur restent fixés par adhérence à des côtés opposés de la mousse de polyuréthane moulée pour former un stratifié.

6. Procédé selon l'une quelconque des revendications précédentes, dans lequel le distributeur de fluide à film multicouche comprend un ou plusieurs conduits borgnes en communication fluidique avec une entrée et n'ayant aucune sortie associée, et dans lequel à l'étape b) le distributeur de fluide à film multicouche est déplié ou déroulé par pompage de fluide précurseur de mousse polymère et/ou d'un fluide de gonflage séparé dans les conduits borgnes pour gonfler les conduits borgnes.

7. Procédé selon l'une quelconque des revendications 1 à 5 dans lequel des bras sont fixés à pivotement à des côtés latéraux opposés du distributeur de fluide à film multicouche et sont en outre montés à pivotement au niveau de points de fixation dans une position fixe dans une direction en amont par rapport au distributeur de fluide à film multicouche 10, et dans lequel à l'étape b) les bras s'étendent vers l'extérieur dans une direction latérale pour déplier ou dérouler le distributeur de fluide à film multicouche.

8. Procédé selon l'une quelconque des revendications 1 à 5 dans lequel des ressorts sont attachés à des côtés latéraux opposés du distributeur de fluide à film multicouche et attachés au niveau de points d'attachement 62 dans une position fixe dans une direction en amont par rapport au distributeur de fluide à film multicouche, et dans lequel à l'étape b) les ressorts s'étendent vers l'extérieur dans une direction latérale pour déplier ou dérouler le distributeur de fluide à film multicouche.

9. Procédé selon l'une quelconque des revendications précédentes, dans lequel le distributeur de fluide à film multicouche déplié ou déroulé 10 est inséré à au moins 50 % dans une longueur L de la cavité de moule avant de commencer l'écoulement de fluide précurseur de mousse polymère à l'étape c), et pendant l'étape c) le distributeur de fluide à film multicouche déplié ou déroulé est progressivement retiré en direction de l'ouverture de moule tout en distribuant de façon continue ou intermittente le précurseur de mousse polymère hors de la pluralité de sorties et vers la cavité de moule.

10. Procédé selon l'une quelconque revendication précédente qui est un procédé de panneau stratifié discontinu.
